# EUROPEAN PATENT APPLICATION

(11) **EP 4 765 512 A1**
(43) Date of publication of application: **24.06.2026**
(21) Application number: 25756108.4
(22) Date of filing: 25.08.2025
(51) Int. Cl.: H01R 13/52, H01R 13/6581, H01R 12/71, H04M 1/02

(54) **CONNECTOR AND ELECTRONIC DEVICE INCLUDING SAME**

(30) Priority: 23.08.2024 KR 20240113805; 25.10.2024 KR 20240147739
(71) Applicant: Samsung Electronics Co., Ltd, Suwon-si, Gyeonggi-do 16677 (KR)
(72) Inventor: JUNG, Waneui, Suwon-si, Gyeonggi-do 16677 (KR); MUN, Hanseok, Suwon-si, Gyeonggi-do 16677 (KR); HAN, Jaeryong, Suwon-si, Gyeonggi-do 16677 (KR)
(74) Representative: HGF
(86) International application number: PCT/KR2025/012937
(87) International publication number: WO 2026/043344

(57) **Abstract**

According to an embodiment of the disclosure, there may be provided a connector. The connector may include a fixing portion, a connection portion extending from the fixing portion in a first direction, a first cover member disposed to surround at least a portion of the fixing portion, a second cover member adjacent to the fixing portion or the first cover member and disposed to surround at least a portion of the connection portion, at least a portion of the second cover member including a conductive material, a plurality of contact terminals extending from the fixing portion and partially exposed to an outside of the second cover member at one surface of the connection portion, the plurality of contact terminals being arranged along a second direction crossing the first direction, and an extension extending from a portion of the second cover member including the conductive material. Other various embodiments may also apply.

## Description

### [Technical Field]

Various embodiments of the disclosure relate to an electronic device, e.g., a connector and/or an electronic device including the same.

### [Background Art]

As electronics, information, or communication technology grows, an electronic device comes equipped with various functions. For example, smartphones pack the functionalities of a sound player, imaging device, and scheduler, as well as the communication functionality and, on top of that, may implement more various functions by having applications installed thereon. An electronic device may not only its equipped applications or stored files but also access, wiredly or wirelessly, a server or another electronic device to receive, in real-time, various pieces of information.

With advanced performance and downsizing, it becomes common to carry and use electronic devices, and there have been provided various types of portable electronic devices. For example, a plurality of portable electronic devices, such as a smartphone, a tablet personal computer (PC), a smart watch, a wireless earphone, and/or smart glasses, may be carried and used by one user. As the use of such portable electronic devices becomes widespread and the usage time in external spaces increases, user demands for portability of electronic devices may increase. For example, user(s) may prefer lighter and more downsized electronic devices while demanding that performance such as image quality or sound quality be further enhanced.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment of the disclosure, there may be provided a connector. The connector may include a fixing portion, a connection portion extending from the fixing portion in a first direction, a first cover member disposed to surround at least a portion of the fixing portion, a second cover member adjacent to the fixing portion or the first cover member and disposed to surround at least a portion of the connection portion, at least a portion of the second cover member including a conductive material, a plurality of contact terminals extending from the fixing portion and partially exposed to an outside of the second cover member at one surface of the connection portion, the plurality of contact terminals being arranged along a second direction crossing the first direction, and an extension extending from a portion of the second cover member including the conductive material.

According to an embodiment of the disclosure, an electronic device including a connector couplable to an external connector may be provided. The electronic device may include a housing including a front surface, a rear surface facing a direction opposite to the front surface, and a side wall disposed to at least partially surround a space between the front surface and the rear surface, a connector hole formed to penetrate the side wall, a partition provided inside the housing at a predetermined distance from the side wall and disposed to face the connector hole, and a connector disposed inside the housing and couplable to an external connector. The connector may include a fixing portion fixed to the housing of the electronic device, a connection portion extending from the fixing portion in a first direction, a first cover member disposed to surround at least a portion of the fixing portion, a second cover member adjacent to the fixing portion or the first cover member and disposed to surround at least a portion of the connection portion, at least a portion of the second cover member including a conductive material, a plurality of contact terminals extending from the fixing portion and partially exposed to an outside of the second cover member at one surface of the connection portion, the plurality of contact terminals being arranged along a second direction crossing the first direction, and an extension extending from a portion of the second cover member including the conductive material.

### [Brief Description of Drawings]

The foregoing and other aspects, configurations, and/or advantages of an embodiment of the disclosure will be more apparent from the following detailed description taken in conjunction with the accompanying drawings.
FIG. 1 is a block diagram illustrating an electronic device in a network environment according to an embodiment of the disclosure;
FIG. 2 is a front perspective view illustrating an electronic device according to an embodiment of the disclosure;
FIG. 3 is a perspective view illustrating a rear surface of the electronic device of FIG. 2 according to an embodiment of the disclosure;
FIG. 4 is an exploded front perspective view illustrating an electronic device according to an embodiment of the disclosure;
FIG. 5 is a rear exploded perspective view illustrating an electronic device according to an embodiment of the disclosure;
FIG. 6 is a perspective view illustrating a molded body of a connector according to an embodiment of the disclosure;
FIG. 7 is a perspective view illustrating a state in which a second cover member is coupled to a molded body of a connector according to an embodiment of the disclosure;
FIG. 8 is a perspective view illustrating a state in which a first cover member is coupled to a molded body of a connector according to an embodiment of the disclosure;
FIG. 9 is a perspective view illustrating a connector according to an embodiment of the disclosure, showing a state in which a second sealing member is disposed on a second cover member;
FIG. 10 is a view illustrating a cross-section of the connector of FIG. 9 taken in the A-A' direction according to an embodiment of the disclosure;
FIG. 11 is a plan view illustrating a connector according to an embodiment of the disclosure;
FIG. 12 is a cross-sectional perspective view illustrating a portion of a connector according to an embodiment of the disclosure;
FIG. 13 is a side view illustrating a connector according to an embodiment of the disclosure;
FIG. 14 is a view illustrating a state in which a connector according to an embodiment of the disclosure is disposed in a housing of an electronic device;
FIG. 15 is a perspective view illustrating a plug coupled to a connector according to an embodiment of the disclosure;
FIG. 16 is a view illustrating an internal view of a plug coupled to a connector according to an embodiment of the disclosure;
FIG. 17 is a cross-sectional view illustrating a state in which a plug is coupled to a connector according to an embodiment of the disclosure; and
FIG. 18 is a perspective view illustrating a state in which a plug is coupled to a connector according to an embodiment of the disclosure.

Throughout the drawings, like reference numerals may be assigned to like parts, components, and/or structures.

### [Mode for the Invention]

Generally, electronic devices such as smart phones include a connector according to a protocol such as universal serial bus (USB), thereby being able to be wiredly connected to other electronic devices or receive power for operation or charging. Although efforts to exclude connectors that implement mechanical connections continue as connections with other electronic devices or power supply becomes possible in a wireless manner, such as near field wireless communication or wireless power transmission/reception, wired methods may still be used as these methods may still have faster speed and efficiency than wireless methods. However, such connectors (e.g. for wired methods/connections) may be an obstacle to downsizing or weight reduction of electronic devices. For example, an electronic device without a connector may be easier to downsize or lighten than an electronic device including a connector. Further, when a connector for connection to the outside is disposed in an electronic device capable of waterproofing for daily life, additional space may be required to implement a waterproof structure, meaning it is more difficult to look to downsize the electronic device including the connector.

In electronic devices including connectors, as user demand for thinning of electronic devices increases (e.g. for slimmer designs), demand for thickness reduction of connectors disposed inside the electronic devices also increases. One of various methods for reducing the thickness of the connector is a method of making a connector body using an injection molding process, which may be disadvantageous for enhancing performance of shielding electromagnetic interference (EMI) due to material characteristics of the injection molded product. As another method for reducing the thickness of the connector, a method of making a connector body using a metallic material may be used, which may have a disadvantageous aspect for thickness reduction as it should include a member for securing waterproof performance.

An embodiment of the disclosure is intended to at least address the foregoing issues and/or disadvantages and may provide at least the advantages described below, and may provide a connector that is easy to downsize and/or enables waterproofing for daily life while being downsized and/or an electronic device including the same.

Objects of the disclosure are not limited to the foregoing, and other unmentioned objects would be apparent to one of ordinary skill in the art from the following description.

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

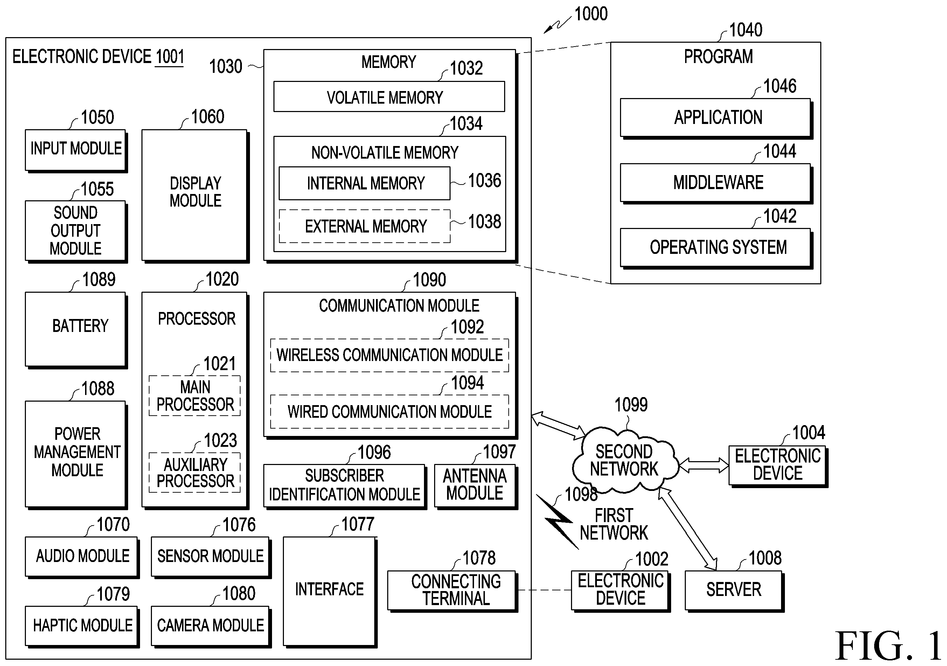

FIG. 1 is a block diagram illustrating an electronic device 1001 in a network environment 1000 according to an embodiment of the disclosure. Referring to FIG. 1, the electronic device 1001 in the network environment 1000 may communicate with at least one of an electronic device 1002 via a first network 1098 (e.g., a short-range wireless communication network), or an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In an embodiment, at least one (e.g., the connecting terminal 1078) of the components may be omitted from the electronic device 1001, or one or more other components may be added in the electronic device 101. According to an embodiment, some (e.g., the sensor module 1076, the camera module 1080, or the antenna module 1097) of the components may be integrated into a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1001 includes the main processor 1021 and the sub processor 1023, the sub processor 1023 may be configured to use lower power than the main processor 1021 or to be specified for a designated function. The sub processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the sub processor 1023 (e.g., an image signal processor or a communication processor) may be implemented as part of another component (e.g., the camera module 1080 or the communication module 1090) functionally related to the sub processor 123. According to an embodiment, the sub processor 1023 (e.g., the neural processing unit) may include a hardware structure specified for artificial intelligence model processing. The artificial intelligence model may be generated via machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by other component (e.g., the processor 1020) of the electronic device 1001, from the outside (e.g., a user) of the electronic device 1001. The input module 1050 may include, for example, a microphone, a mouse, a keyboard, keys (e.g., buttons), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display 1060 may include, for example, a display, a hologram device, or a projector and control circuitry to control a corresponding one of the display, hologram device, and projector. According to an embodiment, the display 1060 may include a touch sensor configured to detect a touch, or a pressure sensor configured to measure the intensity of a force generated by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., the electronic device 1002) directly (e.g., wiredly) or wirelessly coupled with the electronic device 1001.

The sensor module 1076 may detect an operation state (e.g., power or temperature) of the electronic device 1001 or an environmental state (e.g., a state of a user) external to the electronic device 101, and then generate an electrical signal or data value corresponding to the detected state. According to an embodiment, the sensor module 1076 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or motion) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to an embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via a first network 1098 (e.g., a short-range communication network, such as Bluetooth^{™}, wireless-fidelity (Wi-Fi) direct, or infrared data association (IrDA)) or a second network 1099 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1092 may identify or authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 1097 may include a plurality of antennas (e.g., an antenna array). In this case, at least one antenna appropriate for a communication scheme used in a communication network, such as the first network 1098 or the second network 1099, may be selected from the plurality of antennas by, e.g., the communication module 1090. The signal or the power may then be transmitted or received between the communication module 1090 and the external electronic device via the selected at least one antenna. According to an embodiment, other parts (e.g., radio frequency integrated circuit (RFIC)) than the radiator may be further formed as part of the antenna module 1097.

According to an embodiment, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 1001 and the external electronic device 1004 via the server 1008 coupled with the second network 1099. The external electronic devices 1002 or 1004 each may be a device of the same or a different type from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In an embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or health-care) based on 5G communication technology or IoT-related technology.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. The electronic devices according to an embodiment are not limited to those described above.

An embodiment(s) of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities. Some of the plurality of entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

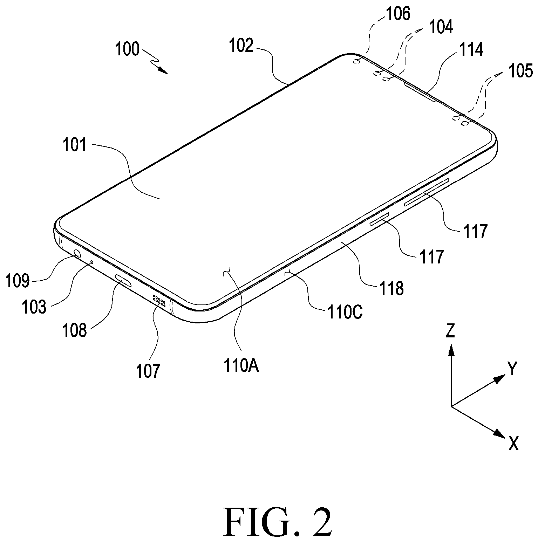

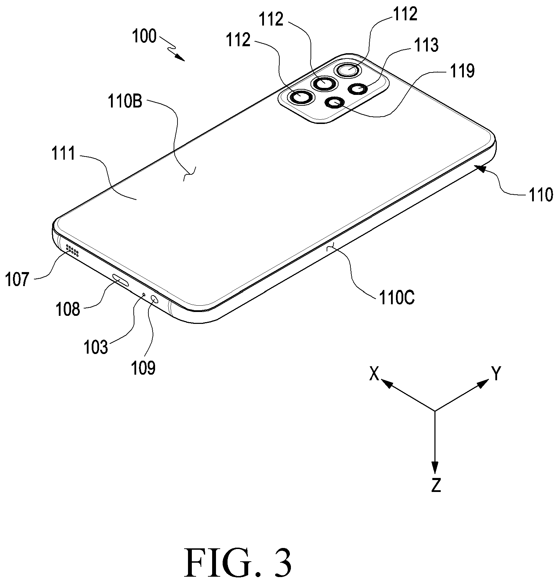

FIG. 2 is a front perspective view illustrating an electronic device 100 according to an embodiment of the disclosure. FIG. 3 is a perspective view illustrating a rear surface of the electronic device 100 of FIG. 2 according to an embodiment of the disclosure.

Referring to FIGS. 2 and 3, according to an embodiment, an electronic device 100 (e.g., the electronic device 1001 of FIG. 1) may include a housing 110 including a first surface (or front surface) 110A, a second surface (or rear surface) 110B, and a side surface 110C surrounding a space between the first surface 110A and the second surface 110B. According to an embodiment (not shown), the housing 110 may denote a structure forming the first surface 110A of FIG. 2, the second surface 110B of FIG. 3, and some of the side surfaces 110C. According to an embodiment, at least part of the first surface 110A may have a substantially transparent front plate 102 (e.g., a glass plate or polymer plate including various coating layers). The second surface 110B may be formed of a substantially opaque rear plate 111. The rear plate 111 may be formed of, e.g., laminated or colored glass, ceramic, polymer, metal (e.g., aluminum, stainless steel (STS), or magnesium), or a combination of at least two thereof. The side surface 110C may be formed by a side structure (or a "side bezel structure") 118 that couples to the front plate 102 and the rear plate 111 and includes a metal and/or polymer. In an embodiment, the rear plate 111 and the side structure 118 may be integrally formed together and include the same material (e.g., a metal, such as aluminum).

Although not shown, the front plate 102 may include area(s) that bend from at least a portion of an edge toward the rear plate 111 and seamlessly extend. In an embodiment, only one of the areas of the front plate 102 (or the rear plate 111), which bend to the rear plate 111 (or front plate 102) and extend may be included in one edge of the first surface 110A. According to an embodiment, the front plate 102 or the rear plate 111 may have a substantially flat plate shape. For example, no bent and extended area may be included. When an area bending and extending is included, the thickness of the electronic device 100 at the portion including the area bending and extending may be smaller than the thickness of the rest.

According to an embodiment, the electronic device 100 may include at least one of a display 101, an audio module (e.g., the microphone hole 103, the external speaker hole 107, and the phone receiver hole 114), a sensor module (e.g., the first sensor module 104, the second sensor module (not illustrated), or the third sensor module 119), a camera module (e.g., the first camera device 105, the second camera device 112, or the flash 113), a key input device 117, a light emitting device 106, and a connector hole (e.g., the first connector hole 108 or the second connector hole 109). In an embodiment, the electronic device 100 may exclude at least one (e.g., the key input device 117 or the light emitting device 106) of the components or may add other components.

The display 101 may output a screen or be visually exposed through a significant portion of the first surface 110A (e.g., the front plate 102), for example. In an embodiment, at least a portion of the display 101 may be visually exposed through the front plate 102 forming the first surface 110A, or through a portion of the side surface 110C. In an embodiment, the edge of the display 101 may be formed to be substantially the same in shape as an adjacent outer edge of the front plate 102. In an embodiment (not illustrated), the interval between the outer edge of the display 101 and the outer edge of the front plate 102 may remain substantially even to give a larger area of visual exposure of the display 101.

In an embodiment (not shown), a recess or an opening may be formed in a portion of the screen display area of the display 101, and there may be included at least one of an audio module (e.g., the phone receiver hole 114), a sensor module (e.g., the first sensor module 104), a camera module (e.g., the first camera device 105), and a light emitting device 106 that are aligned with the recess or the opening. In an embodiment (not shown), at least one of the audio module (e.g., the phone receiver hole 114), sensor module (e.g., the first sensor module 104), camera module (e.g., the first camera device 105), fingerprint sensor (not shown), and light emitting device 106 may be included on the rear surface of the screen display area of the display 101. In an embodiment (not illustrated), the display 101 may be disposed to be coupled with, or adjacent, a touch detecting circuit, a pressure sensor capable of measuring the strength (pressure) of touches, and/or a digitizer for detecting a magnetic field-type stylus pen. In an embodiment, when the front plate 102 or the rear plate 111 includes a bent and extended area(s), at least some of the sensor modules (e.g., the first sensor module 104 and the third sensor module 119) and/or at least some of the key input devices 117 may be disposed in the bent and extended area(s).

The audio modules 103, 107, and 114 may include a microphone hole 103 and speaker holes (e.g., the external speaker hole 107 and the phone receiver hole 114). A microphone for acquiring external sounds may be disposed in the microphone hole 103. In an embodiment, a plurality of microphones may be disposed to detect the direction of the sound. The speaker holes may include an external speaker hole 107 and a phone receiver hole 114. According to an embodiment, the speaker holes (e.g., the external speaker hole 107 and the phone receiver hole 114) and the microphone hole 103 may be implemented as a single hole, or speakers may be included without the speaker holes (e.g., the external speaker hole 107 and the phone receiver hole 114) (e.g., piezo speakers).

The sensor module may generate an electrical signal or data value corresponding to an internal operating state or external environmental state of the electronic device 100. The sensor modules may include a first sensor module 104 (e.g., a proximity sensor) and/or a second sensor module (not shown) (e.g., a fingerprint sensor) disposed on the first surface 110A of the housing 110 and/or a third sensor module 119 disposed on the second surface 110B of the housing 110. The second sensor module (not shown) (e.g., a fingerprint sensor) may be disposed on the second surface 110B or side surface 110C as well as the first surface 110A (e.g., the display 101) of the housing 110. The electronic device 100 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules may include a first camera device 105 disposed on the first surface 110A of the electronic device 100, and a second camera device 112 and/or a flash 113 disposed on the second surface 110B. The camera devices (e.g., the first camera device 105 and the second camera device 112) may include one or more lenses, an image sensor, and/or an image signal processor. The flash 113 may include, e.g., a light emitting diode or a xenon lamp. In an embodiment, one or more lenses (an infrared (IR) camera, a wide-angle lens, and a telephoto lens) and image sensors may be disposed on one surface of the electronic device 100. In an embodiment, flash 113 may emit infrared light. The infrared light emitted by the flash 113 and reflected by the subject may be received through the third sensor module 119. The electronic device 100 or the processor (e.g., the processor 1020 of FIG. 1) of the electronic device 100 may detect depth information about the subject based on the time point when the infrared light is received from the third sensor module 119.

The key input device 117 may be disposed on the side surface 110C of the housing 110. In an embodiment, the electronic device 100 may exclude all or some of the above-mentioned key input devices 117 and the excluded key input devices 117 may be implemented in other forms, e.g., as soft keys, on the display 101. In an embodiment, the key input device may include the sensor module disposed on the second surface 110B of the housing 110.

The light emitting device 106 may be disposed on, e.g., the first surface 110A of the housing 110. The light emitting device 106 may provide, e.g., information about the state of the electronic device 100 in the form of light. In an embodiment, the light emitting device 106 may provide a light source that interacts with, e.g., the camera module (e.g., the first camera device 105). The light emitting device 106 may include, e.g., a light emitting diode (LED), an infrared (IR) LED, or a xenon lamp.

The connector holes (e.g., the first connector hole 108 or the second connector hole 109) may include, e.g., a first connector hole 108 for receiving a connector (e.g., a USB connector) for transmitting/receiving power and/or data to/from an external electronic device (e.g., the electronic device 1002 of FIG. 1) and/or a second connector hole 109 (e.g., an earphone jack) for receiving a connector for transmitting/receiving audio signals to/from the external electronic device.

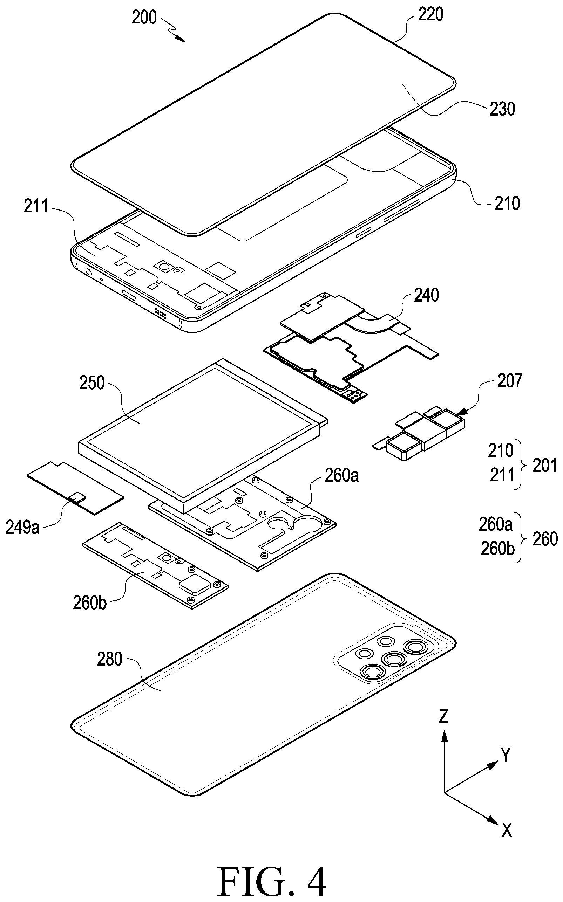

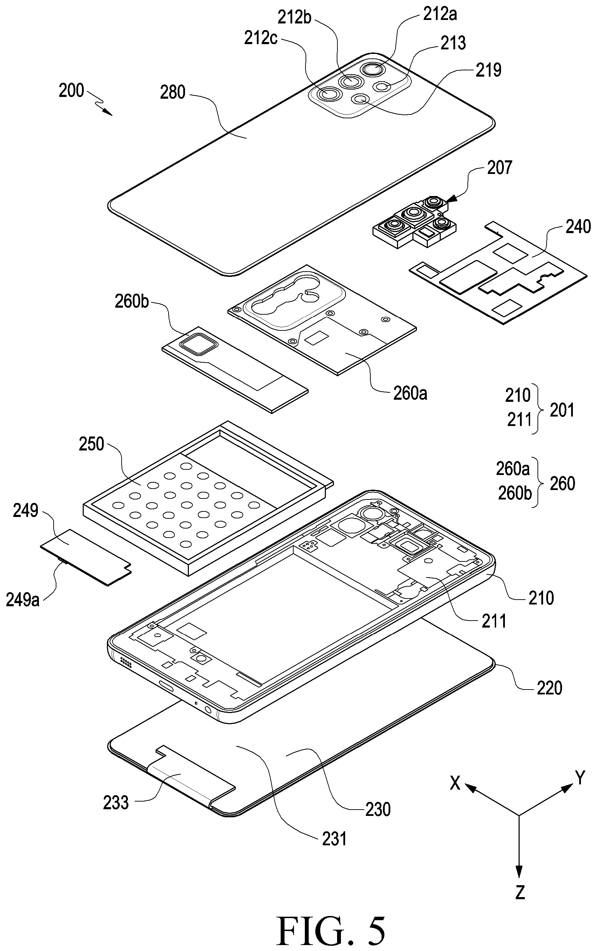

FIG. 4 is an exploded front perspective view illustrating an electronic device 200 (e.g., the electronic device 100 of FIG. 2), according to an embodiment of the disclosure. FIG. 5 is a rear exploded perspective view illustrating an electronic device 200 (e.g., the electronic device 100 of FIG. 2) according to an embodiment of the disclosure.

Referring to FIGS. 4 and 5, an electronic device 200 (e.g., the electronic device 1001, 1002, 1004, or 100 of FIG. 1, 2, or 3) may include a side structure 210, a first supporting member 211 (e.g., a bracket), a front plate 220 (e.g., the front plate 102 of FIG. 2), a display 230 (e.g., the display 101 of FIG. 2), a printed circuit board (or a board assembly) 240, a battery 250, a second supporting member 260 (e.g., a rear case), an antenna (not shown) (e.g., the antenna module 1097 of FIG. 1), a camera assembly 207, and a rear plate 280 (e.g., the rear plate 111 of FIG. 3). In an embodiment, the electronic device 200 may exclude at least one (e.g., the first supporting member 211 or the second supporting member 260) of the components or may add other components. At least one of the components of the electronic device 200 may be the same or similar to at least one of the components of the electronic device 100 of FIG. 2 or 3 and no duplicate description is made below.

According to an embodiment, the first supporting member 211 may be disposed inside the electronic device 200 to be connected with the side structure 210 or integrated with the side structure 210. The first supporting member 211 may be formed of, e.g., a metal and/or non-metallic material (e.g., polymer). When at least partially formed of a metallic material, a portion of the side structure 210 or the first supporting member 211 may function as an antenna. The display 230 may be joined onto one surface of the first supporting member 211, and the printed circuit board 240 may be joined onto the opposite surface of the first supporting member 211. A processor (e.g., the processor 1020 of FIG. 1), memory (e.g., the memory 1030 of FIG. 1), and/or an interface (e.g., the interface 1077 of FIG. 1) may be mounted on the printed circuit board 240. The processor may include one or more of, e.g., a central processing unit, an application processor, a graphic processing unit, an image signal processor, a sensor hub processor, or a communication processor. In an embodiment, processor and/or memory may refer to one of the circuit devices mounted on an integrated circuit chip.

According to an embodiment, the electronic device 200 may further include at least one auxiliary circuit board 249 separately from the printed circuit board 240. An auxiliary circuit board 249 may include, e.g., a connector 249a (e.g., the connection (or connecting) terminal 1078 of FIG. 1) for connection to an external electronic device or power supply. In an embodiment, the connector 249a may be disposed inside the housing 201 and may be disposed corresponding to the first connector hole 108 of FIG. 2. In an embodiment, around the auxiliary circuit board 249, the input module 1050 (e.g., microphone) or the sound output module 1055 (e.g., speaker) of FIG. 1, and antennas not illustrated may be disposed, and these electrical/electronic components may be electrically connected to the printed circuit board 240 via the auxiliary circuit board 249.

According to an embodiment, the first supporting member 211 and the side structure 210 may be collectively referred to as a front case or a housing 201. According to an embodiment, the housing 201 may be generally understood as a structure for receiving, protecting, or disposing the printed circuit board 240 or the battery 250. In an embodiment, the housing 201 may be understood as including a structure that the user may visually or tactilely recognize from the outside of the electronic device 200, e.g., the side structure 210, the front plate 220, and/or the rear plate 280. In an embodiment, the 'front or rear surface of the housing 201' may refer to the first surface 110A of FIG. 2 or the second surface 110B of FIG. 3. In an embodiment, the first supporting member 211 may be disposed between the front plate 220 (e.g., the first surface 110A of FIG. 2) and the rear plate 280 (e.g., the second surface 110B of FIG. 3) and may function as a structure for placing an electrical/electronic component, such as the printed circuit board 240 or the camera assembly 207.

The display 230 may include a display panel 231 and a flexible printed circuit board 233 extending from the display panel 231. It may be understood that the flexible printed circuit board 233 is, e.g., electrically connected to the display panel 231 while at least partially disposed on the rear surface of the display panel 231. In an embodiment, reference number '231' may be understood as a protective sheet disposed on the rear surface of the display panel. For example, the protective sheet may be understood as a portion of the display panel 231 unless otherwise designated in the detailed description below. In an embodiment, the protective sheet may function as a cushioning structure that absorbs external force (e.g., a low-density elastic material, such as a sponge) or an electromagnetic shielding structure (e.g., a copper sheet (CU sheet)). According to an embodiment, the display 230 may be disposed on the inner surface of the front plate 220 and, by including a light emitting layer, output a screen through at least a portion of the front plate 220 or the first surface 110A of FIG. 2. As mentioned above, the display 230 may output substantially the entire area of the front plate 220 or the first surface 110A of FIG. 2.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 200 with an external electronic device and may include a USB connector, an SD card/multimedia card (MMC) connector, or an audio connector.

The second supporting member 260 may include, e.g., an upper supporting member 260a and a lower supporting member 260b. In an embodiment, the upper supporting member 260a, together with a portion of the first supporting member 211, may be disposed to surround the printed circuit board 240. For example, the printed circuit board 240 may be substantially disposed between the first supporting member 211 and the second supporting member 260 (e.g., upper supporting member 260a). A circuit device (e.g., a processor, a communication module, or memory) implemented in the form of an integrated circuit chip or various electrical/electronic components may be disposed on the printed circuit board 240. According to an embodiment, the printed circuit board 240 may receive an electromagnetic shielding environment from the upper supporting member 260a. In an embodiment, at least one shield can may be disposed on the printed circuit board 240. For example, the shield can may provide an electromagnetic shielding environment to some areas or spaces on the printed circuit board 240. In an embodiment, the shield can may be disposed to surround at least a portion of an integrated circuit chip where a processor, memory, and/or communication module is mounted.

According to an embodiment, the lower supporting member 260b may be utilized as a structure in which electrical/electronic components, such as the auxiliary circuit board 249, a speaker module and an interface (e.g., a USB connector, an SD card/MMC connector, or an audio connector) may be disposed. In an embodiment, electrical/electronic components, such as a speaker module and an interface (e.g., a USB connector, an SD card/MMC connector, or an audio connector) may be disposed on an additional printed circuit board, e.g., the auxiliary circuit board 249. For example, the lower supporting member 260b, together with the other part of the first supporting member 211, may be disposed to surround the additional printed circuit board. A speaker module or interface disposed on the auxiliary circuit board 249 or lower supporting member 260b may be disposed corresponding to the connector hole (e.g., the first connector hole 108 or the second connector hole 109) or the audio module (e.g., the microphone hole 103 or the speaker hole (e.g., the external speaker hole 107 or the phone receiver hole 114)) of FIG. 2.

The battery 250 may be a device for supplying power to at least one component of the electronic device 200. The battery 250 may include, e.g., a primary cell which is not rechargeable, a secondary cell which is rechargeable, or a fuel cell. At least a portion of the battery 250 may be disposed on substantially the same plane as the printed circuit board 240. The battery 250 may be integrally or detachably disposed inside the electronic device 200.

Although not shown, the antenna may include a conductor pattern implemented on the surface of the first supporting member 211 and/or the surface of the second supporting member 260 through, e.g., laser direct structuring (LDS). In an embodiment, the antenna may include a printed circuit pattern formed on the surface of the thin film. The thin film-type antenna may be disposed between the rear plate 280 and the battery 250. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. In an embodiment of the disclosure, another antenna structure may be formed by a portion or combination of the side structure 210 and/or the first supporting member 211.

The camera assembly 207 may include at least one camera module. Inside the electronic device 200, the camera assembly 207 may detect at least a portion of the light incident through the optical hole or the camera windows 212a, 212b, 212c, 213, and 219. In an embodiment, the camera assembly 207 may be disposed on the first supporting member 211 in a position adjacent to the printed circuit board 240. In an embodiment, the camera module(s) of the camera assembly 207 may be generally aligned with either one of the camera windows 212a, 212b, 212c, 213, and 219 and be at least partially surrounded by the second supporting member 260 (e.g., the upper supporting member 260a).

The following embodiments may be described with reference to the above-described configurations of the electronic devices 1001, 1002, 1004, 100, and 200. Even when not directly mentioned, the above-described configurations of the embodiments may likewise apply to the following embodiments. It is noted that the orthogonal coordinate system referred to in the foregoing and/or following embodiments is exemplified for brevity of description, and the embodiment(s) of the disclosure are not limited thereto. For example, the orthogonal coordinate system mentioned in the disclosure may be differently defined depending on the type (e.g., bar type, foldable type, rollable type, and/or slidable type) of the electronic device to be actually manufactured, the user's use habit, and/or the orientation of the electronic device.

In the following detailed description, a length direction, a width direction, and/or a thickness direction of the electronic device may be mentioned and may be defined as a 'Y-axis direction," 'X-axis direction', and/or 'Z-axis direction,' respectively. In an embodiment, 'negative/positive (-/+)' may be mentioned together with the Cartesian coordinate system exemplified in the drawings with respect to the direction in which the component is oriented. For example, the front surface of the electronic device and/or housing may be defined as a 'surface facing in the +Z direction,' and the rear surface may be defined as a 'surface facing in the -Z direction'. In an embodiment, the side surface of the electronic device and/or housing may include an area facing in the +X direction, an area facing in the +Y direction, an area facing in the -X direction, and/or an area facing in the -Y direction. In an embodiment, the 'X-axis direction' may mean including both the '-X direction' and the '+X direction'. It should be noted that the directions are so defined with respect to the Cartesian coordinate system shown in the drawings for the sake of brevity of description, and the description of these directions or components do not limit an embodiment(s) of the disclosure. For example, the Cartesian coordinate system may be defined as different from that disclosed in the disclosure depending on the specifications of the electronic device or the user's usage habits.

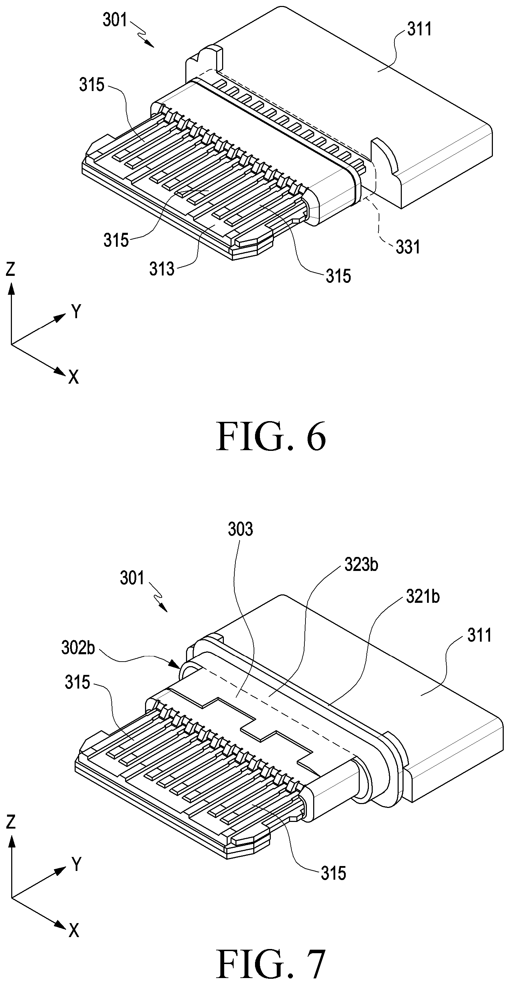

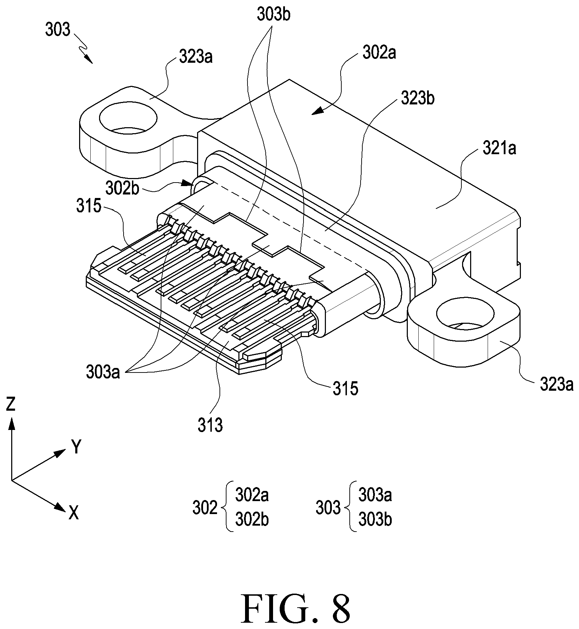

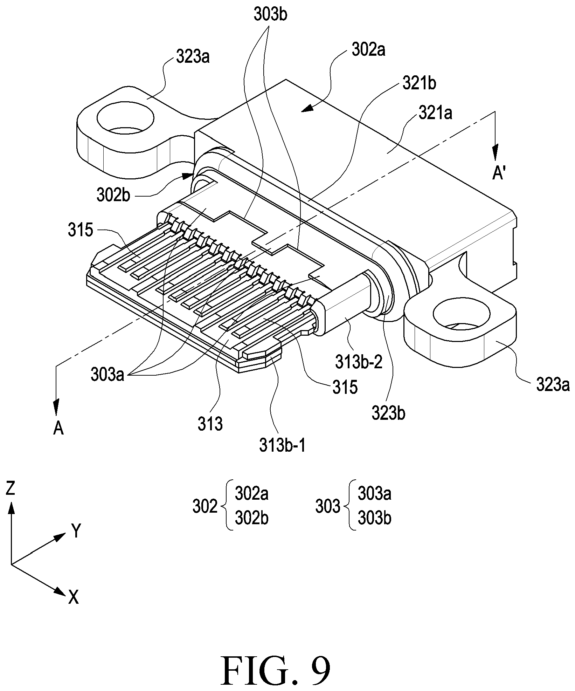

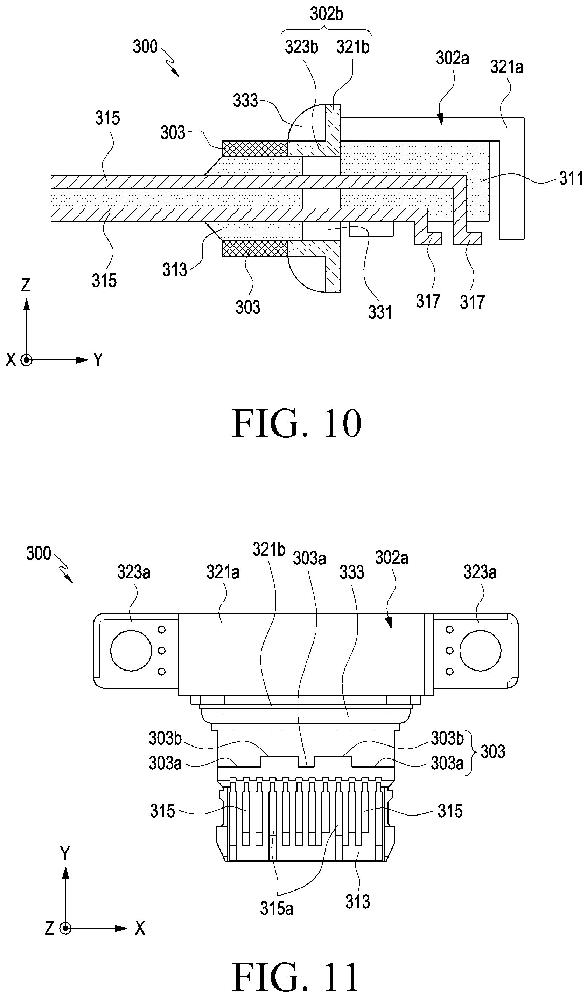

FIG. 6 is a perspective view illustrating a molded body of a connector according to an embodiment of the disclosure. FIG. 7 is a perspective view illustrating a state in which a second cover member 302b is coupled to a molded body 301 of a connector 300 according to an embodiment of the disclosure. FIG. 8 is a perspective view illustrating a state in which a first cover member 302a is coupled to a molded body 301 of a connector 300 according to an embodiment of the disclosure. FIG. 9 is a perspective view illustrating a connector 300 according to an embodiment of the disclosure, showing a state in which a second sealing member 333 is disposed on a second cover member 302b. FIG. 10 is a view illustrating a cross-section of the connector 300 of FIG. 9 taken in the A-A' direction according to an embodiment of the disclosure.

Referring to FIGS. 6 to 10, the connector 300 may include (e.g. may comprise) a USB connector (e.g., C-type), and may be disposed in an electronic device (e.g., the electronic devices 1001, 1002, 1004, 100, 200 of FIGS. 1 to 5) to be used to provide connection to an external electronic device or supply power. In an embodiment, the connector 300 may include (e.g. comprise) a molded body 301, a first cover member 302a, a second cover member 302b, and/or a plurality of contact terminals 315. In an embodiment, the plurality of contact terminals 315 may be understood as a portion of the molded body 301. In the embodiment referenced through the drawings of the disclosure, the first cover member 302a and the second cover member 302b are illustrated as being manufactured and assembled in a separated state, but the disclosure is not necessarily limited thereto. The first cover member 302a and the second cover member 302b may be manufactured as an integrated component.

According to an embodiment, the molded body 301 may be understood as including (e.g. comprising) a fixing portion 311 and a connection portion 313, e.g., as a structure for disposing or fixing the contact terminals 315. For example, the molded body 301 may be formed of a fixing portion 311 wherein a plurality of contact terminals may be disposed (e.g. at least partially embedded) and the fixing portion 311 which may be configured to be fixed (connected, attached) inside a housing of the electronic device (for example, to a circuit board provided within the electronic device), and a connection portion 313 wherein the plurality of contact terminals may connect to (e.g. form a connection with, couple to) an external connector (e.g. a plug 400, for example a USB-C type). In an embodiment, the connector 300 may include a first sealing member 331 that seals (e.g. provides a seal to) at least a portion between the molded body 301 and the second cover member 302b inside the second cover member 302b (e.g. at an inside surface of), and a second sealing member 333 disposed to surround at least a portion of an outer circumferential surface of the second cover member 302b. For example, the first sealing member 331 may be disposed between the molded body 301 (e.g., the connection portion 313) and an inner circumferential surface of the second cover member 302b to implement a waterproof or dustproof structure. In an embodiment, when the connector 300 is disposed inside an electronic device 200 (e.g., the housing 201 of FIG. 5), the second sealing member 333 may implement a waterproof or dustproof structure between the connector 300 (e.g., the second cover member 302b) and the housing 201. According to the specifications of the electronic device 200, at least one of the first sealing member 331 or the second sealing member 333 may be omitted.

Referring to FIG. 6, the connection portion 313 may extend from the fixing portion 311 along a first direction (e.g., -Y direction). For example, when the connector 300 is disposed in an electronic device 200, the first direction may be a direction extending in an outward direction from the inside of the housing toward an outside of the electronic device. In an embodiment, the contact terminals 315 may be understood as extending from the fixing portion 311 in the first direction and being partially exposed to an external space on the connection portion 313. For example, the contact terminals 315 may be understood as extending in the first direction and being disposed (or arranged) along a second direction (e.g., X-axis direction) crossing the first direction. As is described with reference to FIG. 11, the contact terminals 315 may be partially embedded in the fixing portion 311 and may provide contact pad(s) 317 exposed to one surface of the fixing portion 311 (e.g., a surface facing the -Z direction). According to the specifications of the electronic device 200 or an arrangement state inside the housing 201, the contact pad(s) 317 may be understood as being exposed on a surface facing the -Z direction among the surfaces of the fixing portion 311. For example, the contact pad(s) 317 may substantially be a portion of the contact terminals 315 and may refer to portions exposed to one surface of the fixing portion 311. In an embodiment, it should be noted that the '-Z direction' is exemplarily mentioned as a direction in which the contact pad(s) 317 are exposed, but embodiments of the disclosure are not limited thereto. For example, according to the manufacturing specifications of the electronic device or user usage habits, arrangement directions of components may be described differently from what is mentioned in an embodiment.

According to an embodiment, the contact terminals 315 may be disposed or fixed on the molded body 301 simultaneously with the molded body 301 (e.g., the fixing portion 311 and/or connection portion 313) being molded through an insert injection process. For example, with the contact terminals 315 disposed in a mold, molten resin is injected into the mold and cured, so that as the molded body 301 is molded, the contact terminals 315 may be substantially disposed on the molded body 301. The number and arrangement of the contact terminals 315 may be implemented differently according to the use or standard of the connector 300.

According to an embodiment, before the first cover member 302a and/or the second cover member 302b is disposed, the first sealing member 331 may be disposed on the molded body 301. The first sealing member 331 may be disposed to surround at least a portion of a circumference of the connection portion 313, for example. In an embodiment, a structure in which the contact terminals 315 are exposed in some areas between the connection portion 313 and the fixing portion 311 may be implemented, and in this case, the first sealing member 331 may be understood as being disposed between the connection portion 313 and the fixing portion 311. For example, the first sealing member 331 may conceal or protect a portion of the contact terminal(s) between the connection portion 313 and the fixing portion 311.

According to an embodiment, the first sealing member 331 may be formed of an elastic material such as silicone or urethane, for example. In an embodiment, the first sealing member 331 may have a closed curve shape. For example, when viewed along the Y-axis direction, the first sealing member 331 may be understood as being disposed to substantially surround the connection portion 313. In an embodiment, when viewed along the Y-axis direction, the first sealing member 331 may be understood as partially overlapping the connection portion 313 (or the fixing portion 311). In an embodiment, the first sealing member 331 may be manufactured in a ring shape and assembled to the connection portion 313, or may be implemented in a designated shape by applying a liquid resin around the connection portion 313 and cooling or curing it.

Referring to FIGS. 7 and 8, the first cover member 302a is disposed to surround at least a portion of the fixing portion 311, and the second cover member 302b may be coupled to surround at least a portion around the connection portion 313. In an embodiment, the first cover member 302a may have a bent plate shape. For example, the first cover member 302a may be a component molded from synthetic resin or a component manufactured by processing a metal plate. In an embodiment, the second cover member 302b may have a closed curve shape. For example, when viewed from the Y-axis direction, the second cover member 302b may be understood as being disposed to surround the connection portion 313. The second cover member 302b may be a component molded from synthetic resin or a component manufactured by processing a metal plate, for example.

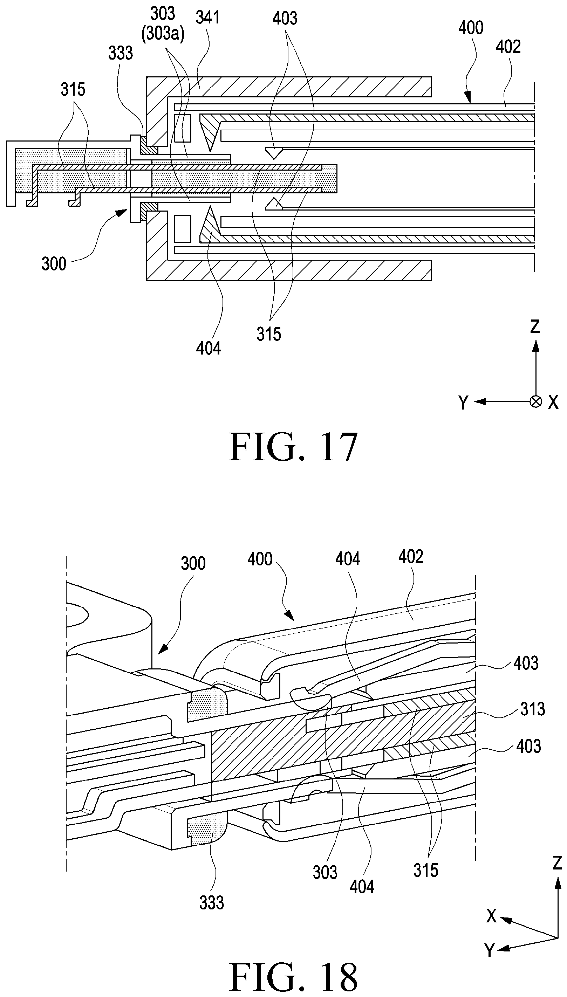

According to an embodiment, the first cover member 302a may include a cover portion 321a surrounding a portion of the fixing portion 311, and at least one fixing piece 323a extending from the cover portion 321a. In an embodiment, when a portion of the contact terminals 315 (e.g., the contact pad(s) 317) is exposed on a surface facing the -Z direction among the surfaces of the fixing portion 311, the cover portion 321a may substantially expose the surface where the contact pad(s) 317 are disposed. In an embodiment, the cover portion 321a may have a closed curve shape surrounding the fixing portion 311, and in this case, the contact pad(s) 317 may be disposed on a surface facing the +Y direction on the fixing portion 311. The fixing piece 323a may provide a means for disposing or fixing the connector 300 to a circuit board (e.g., the auxiliary circuit board 249 of FIG. 5 or FIG. 18), e.g., as a portion extending in a second direction (e.g., X-axis direction) from two opposite ends of the cover portion 321a. Although not given a reference number, the fixing piece 323a provides holes penetrating two opposite surfaces, and a fastening member such as a screw may arrange or fix the first cover member 302a and/or the connector 300 to another structure (e.g., the auxiliary circuit board 249 or the first supporting member 211 of FIG. 5).

According to an embodiment, the second cover member 302b may include a base portion 321b and a support portion 323b protruding from the base portion 321b in the Y-axis direction (e.g., -Y direction). In an embodiment, the base portion 321b may be understood as a plate (or frame shape) disposed substantially parallel to the XZ plane. In an embodiment, when the second cover member 302b is disposed on the molded body 301, the base portion 321b may be disposed to face the fixing portion 311. For example, the base portion 321b may be disposed to substantially contact the fixing portion 311. In an embodiment, the second cover member 302b, e.g., the base portion 321b, may substantially contact the first cover member 302a (e.g., the cover portion 321a). In an embodiment, the base portion 321b may be integrally formed with the first cover member 302a (e.g., the cover portion 321a). In an embodiment, the support portion 323b may have a tube shape extending from the base portion 321b in the -Y direction (and/or +Y direction). For example, with the base portion 321b disposed to face the fixing portion 311, the support portion 323b may be disposed to surround the connection portion 313. In an embodiment, the support portion 323b may be understood as being disposed to surround at least a portion of an area where the first sealing member 331 is disposed in the connection portion 313. For example, the first sealing member 331 may contact an inner circumferential surface of the support portion 323b to implement a waterproof or dustproof structure between the connection portion 313 and the second cover member 302b.

Referring to FIGS. 9 and 10, the second sealing member 333 may be disposed to surround at least a portion of an outer surface of the second cover member 302b. For example, the second sealing member 302b may contact one surface (e.g., outer surface, a surface facing in the -Y direction) of the base portion 321b while contacting an outer surface of the support portion 323b. In an embodiment, in the Z-axis direction, the second sealing member 333 may be disposed to substantially overlap the first sealing member 331 with a portion of the support portion 323b therebetween. For example, the first sealing member 331 and the second sealing member 333 may be disposed in a structure stacked in a thickness direction of the electronic device 200 or a thickness direction of the connector 300, or in a structure in which the second sealing member 333 surrounds an area where the first sealing member 331 is disposed. In an embodiment, the second sealing member 333 may be disposed to surround an area where the first sealing member 331 is disposed, and the first sealing member 331 and the second sealing member 333 may be understood as being disposed in a single plane substantially parallel to the XZ plane.

According to an embodiment, the second sealing member 333 may be formed of an elastic material such as silicone or urethane, for example. In an embodiment, the second sealing member 333 may have a closed curve shape. For example, when viewed along the Y-axis direction, the second sealing member 333 may be understood as being disposed to substantially surround the second cover member 302b (e.g., the support portion 323b). In an embodiment, when viewed along the Y-axis direction, the second sealing member 333 may be understood as partially overlapping the second cover member 302b (e.g., the base portion 321b). In an embodiment, the second sealing member 333 may be manufactured in a ring shape and assembled to the second cover member 302b, or may be implemented in a designated shape by applying a liquid resin around the second cover member 302b and cooling or curing it.

Referring to FIG. 10, the first cover member 302a is disposed to substantially conceal a surface of the fixing portion 311 facing the +Z direction, and the second cover member 302b (e.g., the base portion 321b and/or support portion 323b) may be substantially concealed by the second sealing member 333. In an embodiment, the first sealing member 331 may be understood as being disposed to substantially overlap an area where the second sealing member 333 is disposed. In an embodiment, the contact terminals 315 may electrically contact an external connector by being exposed to the outside of the second cover member 302b from at least one surface of the connection portion 313 (e.g., a surface facing the +Z direction). For example, when the connector 300 is connected to an external connector (e.g., plug), at least a portion of the connection portion 313 may be understood as being received in the external connector (e.g., plug).

Referring to FIGS. 7 to 10, the connector 300 may further include an extension 303 (e.g. an extension portion). According to an embodiment, at least a portion of the second cover member 302b may include a conductive material. For example, the support portion 323b protruding from the base portion 321b in the Y-axis direction (e.g., -Y direction) in the second cover member 302b may include a conductive material. Here, the conductive material may include, e.g., materials such as metal, carbon, and/or carbon nanotubes. According to an embodiment, the support portion 323b may include a metallic material (e.g., stainless steel).

The extension 303 may be a portion further extending in the Y-axis direction (e.g., -Y direction) from the portion including the conductive material, e.g., the support portion 323b, of the second cover member 302b. According to an embodiment, the extension 303 may include a conductive material. Here, the extension 303 may also include conductive materials such as metal, carbon, and/or carbon nanotubes, for example. According to an embodiment, the extension 303 may include a metallic material (e.g., stainless steel). According to an embodiment, the extension 303 may be a portion integrally extending from the support portion 323b. According to an embodiment of the disclosure, the connector 300 may include an extension 303 extending from a second support portion 323b that supports the second sealing member 333 without using a separate other structure.

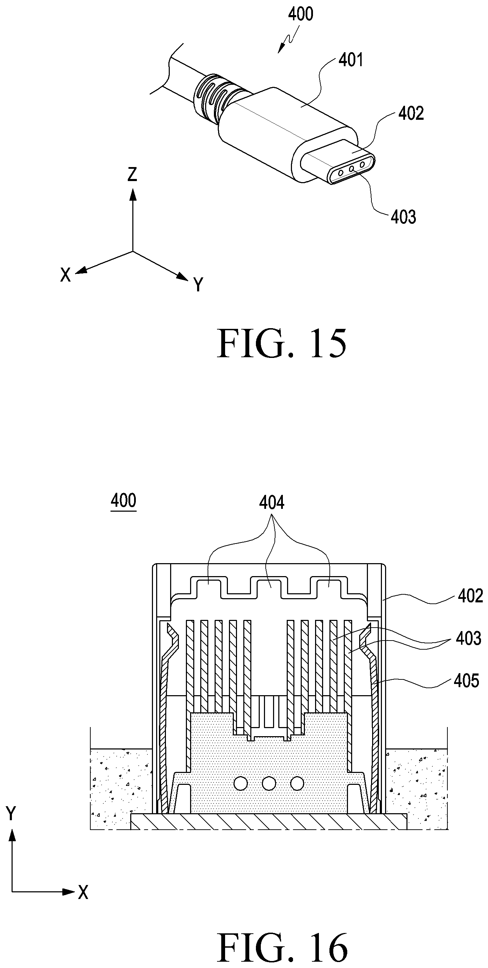

As is described below in detail through embodiments of FIGS. 15 to 18, the extension 303 may be electrically connected to a ground portion (e.g., the ground portion 404 of FIGS. 15 to 18) formed in an external connector (e.g., the plug 400 of FIGS. 15 to 18). Since the extension 303 includes a conductive material, the extension 303 electrically connected to the ground portion 404 of an external connector (e.g., plug) may also function as a ground portion. Therefore, the extension 303 of the disclosure may be referred to as a 'ground portion 303 of the connector 300'.

As the extension 303 is electrically connected to a ground portion (e.g., the ground portion 404 of FIGS. 15 to 18) formed in an external connector (e.g., the plug 400 of FIGS. 15 to 18), it may have an effect of preventing and/or reducing the influence of external noise on contact terminals of the connector.

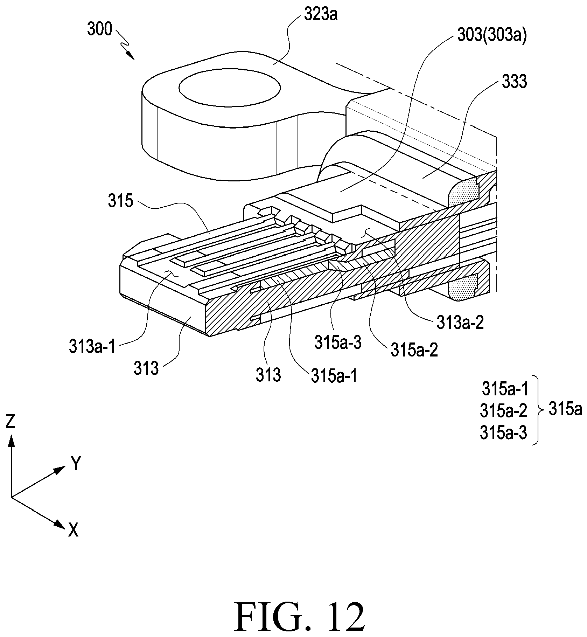

The extension 303 may extend from (e.g. extend in a -Y direction) a portion of the second cover member 302b including a conductive material (e.g. the support portion 323b of the second cover member 302b) and may include a first portion 303a configured to be electrically connected to a ground portion of the external connector when coupling an external connector (e.g., plug) to the connector 300, and a second portion 303b extending from the portion including the conductive material and having a different length (e.g. a shorter length) from the first portion 303a. The first portion 303a and the second portion 303b of the extension 303 are described below in detail with reference to FIGS. 11 and 12.

FIG. 11 is a plan view illustrating a connector 300 (e.g., the connector 300 of FIG. 9) according to an embodiment of the disclosure. FIG. 12 is a cross-sectional perspective view illustrating a portion of a connector 300 (e.g., the connector 300 of FIG. 9) according to an embodiment of the disclosure.

According to an embodiment, a portion of the contact terminals 315 may be substantially embedded inside the connection portion 313 and the fixing portion 311 in a state configured so that at least a portion is visually exposed to the outside from a surface of the connection portion 313. The contact terminals 315 may include a plurality of contact terminals 315, and the plurality of contact terminals 315 may be disposed substantially parallel in the X-axis direction.

Referring to FIGS. 11 and 12, the extension 303 may include a first portion 303a and a second portion 303b extending from a portion including a conductive material of the second cover member. The first portion 303a and the second portion 303b may extend different distances (e.g. may have different lengths extending from) from the support portion 323b of the second cover member 302b, for example. According to an embodiment, the first portion 303a may extend longer from the support portion 323b of the second cover member 302b compared to the second portion 303b.

According to the disclosure, the first portion 303a of the extension 303 is a portion connected to a ground portion of an external connector (e.g., plug) and may extend long from the support portion 323b to secure EMI performance. Here, securing EMI performance may be for preventing the electronic device from being interfered by noise such as electrostatic discharge (ESD) and electrical overstress (EOS). The other portion of the extension 303, i.e., the second portion 303b, which is not the first portion 303a, may not be connected to a ground portion of an external connector (e.g., plug), and this portion may extend relatively shorter from the support portion 323b compared to the first portion 303a. Accordingly, the portion not connected to a ground portion of an external connector (e.g., plug) may secure sufficient separation distance from contact terminals (e.g. by having an extension length of a shorter distance from the second cover member 302b, which may correspond to being a set separation distance from the contact terminals) thereby preventing contact terminals from being short-circuited when moisture or foreign objects flow into the connector 300 from the outside.

Referring to FIGS. 11 and 12, the plurality of contact terminals 315 may include, e.g., a power terminal (e.g., vbus), and the second portion 303b of the extension 303 may be formed at a position corresponding to the power terminal. That is, the second portion 303b of the extension 303 that is adjacent to, or at a region corresponding to the power terminal of the plurality of connect terminals 315, may be provided (or formed) with a recessed (or shorter) extension length from the second cover member 302b than the first portion 303a of the extension 303, so as to provide a separation distance from the power terminal.

According to an embodiment, some of the plurality of contact terminals 315 may have a structure substantially embedded in the connection portion 313 or the fixing portion 311 to prevent contact terminals from being short-circuited when moisture or foreign objects flow into the connector 300 from the outside. Referring to FIG. 12, any one of the plurality of contact terminals 315, e.g., a power terminal, may include a first terminal portion 315a-1 exposed to surfaces 313a-1, 313a-2 of the connection portion 313, a second terminal portion 315a-2 disposed inside the connection portion 313 and spaced apart from the surfaces 313a-1, 313a-2 of the connection portion 313, and a third terminal portion 315a-3 connecting the first terminal portion 315a-1 and the second terminal portion 315a-2. According to an embodiment, the third terminal portion 315a-3 may have at least a partially curved form. As the plurality of contact terminals 315 include the second terminal portion 315a-2 and the third terminal portion 315a-3, it is possible to prevent contact terminals from being short-circuited when moisture or foreign objects flow into the connector 300 from the outside.

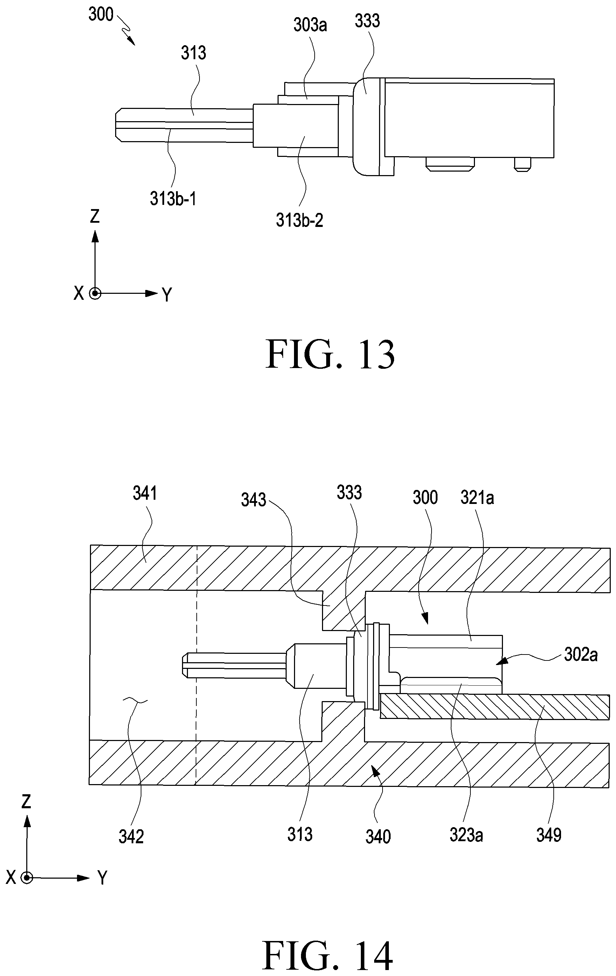

FIG. 13 is a side view illustrating a connector 300 (e.g., the connector 300 of FIG. 9) according to an embodiment of the disclosure.

Referring to FIGS. 12 and 13, the extension 303 may have a structure that further extends from the support portion 323b only on some surfaces of the connection portion 313. For example, the extension 303 may have a structure that extends only on a first surface (e.g., the upper surfaces 313a-1, 313a-2) of the connection portion 313 and/or a second surface (e.g., lower surface) facing opposite to the first surface. For example, a first surface (upper surface 313-1, 313-2, top surface) may be an upper surface of the connection portion 313 when viewed from above (e.g. from a -Z direction). For example, the first surface of the connection portion 313 may be a surface upon which the plurality of terminals 315 are exposed (e.g. for connection to an external connector). According to an embodiment, the extension 303 may not be provided on a third surface (e.g., side surface) between the first surface and the second surface of the connection portion 313.

According to an embodiment, referring to FIGS. 9, 11, and 13, side surfaces 313b-1, 313b-2 of the connection portion 313 may form substantially the same plane. This may mean that the thickness of the side surfaces of the connection portion 313 is formed to have a substantially constant thickness. According to an embodiment, the extension 303 may be excluded from the side surfaces 313b-1, 313b-2 of the connection portion 313. That is, in examples, the extension 303 may not comprise a portion that extends from the second cover member 302b along (e.g. on) the side surfaces 313b-1, 313b-2. Through a configuration in which the side surfaces 313b-1, 313b-2 of the connection portion 313 form substantially the same plane, interference with some components of an external connector (e.g., side latch) may be prevented when coupling with the external connector (e.g., plug).

FIG. 14 is a view illustrating a state in which a connector according to an embodiment of the disclosure (e.g. a connector as disclosed in respect of Figures 6-13) is disposed in a housing of an electronic device.

Referring further to FIG. 14, a fixing portion 311 of a molded body (e.g., the molded body 301 of FIG. 6) is disposed on a circuit board 349 (e.g., the auxiliary circuit board 249 of FIG. 5), and the connection portion 313 may protrude to one side from an edge of the circuit board 349, e.g., in the -Y direction. The fixing portion 311, e.g., may be disposed so that a surface where contact pad(s) connected to contact terminals are disposed directly faces the circuit board 349, thereby enabling the contact terminals to be electrically connected to the circuit board 349. An electronic device 200, e.g., a housing 340, may include a connector hole 342 (e.g., the first connector hole 108 of FIG. 2) formed to penetrate (e.g. extend into) a side wall 341 (e.g., the side structure 210 of FIG. 5) of the housing 340, and a partition 343 disposed to face the connector hole 342 inside the housing 340. For example, the partition 343 may be understood as being disposed at a designated distance from the side wall 341. For example, the partition 343 may be formed within the housing (e.g. inside a side wall 341) and the partition 343 formed around an inner surface thereof to provide a division between the connector hole 342 and an inside area of the housing. In an embodiment, the designated distance between the partition 343 and the side wall 341 may refer to a design value regarding a length where an external connector is inserted or received into the inside of the housing 340.

According to an embodiment, inside the housing 340, the connector hole 342 penetrating the side wall 341 and/or the partition 343 may substantially function as a receptacle that receives an external connector. For example, even when the connector 300 does not include a separate receptacle for coupling with an external connector, it may be stably coupled with an external connector while disposed on the housing 340. According to an embodiment, to receive a receptacle of the external connector, the size of the connector hole 342 may correspond to the size of the receptacle of the external connector. In an embodiment, since a structure functioning as a receptacle may be omitted from the connector 300, the connector 300 may be downsized, and securing space for disposing the connector 300 inside the housing 340 may be facilitated. In an embodiment, since a structure functioning as a receptacle may be omitted from the connector 300, the electronic device 200 and/or the housing 340 may be downsized.

According to an embodiment, inside the housing 340, the fixing portion 311 may be disposed on one side of the partition 343, and the connection portion 313 may penetrate the partition 343 to be at least partially disposed inside the connector hole 342. For example, the fixing portion 311 and/or the circuit board 349 may be understood as being disposed adjacent to the partition 343 inside the housing 340. In the embodiment, when viewed from outside the electronic device 200 or the housing 340, the connection portion 313 may be understood as being disposed to directly face the connector hole 342 (e.g. facing outward of the electronic device 200 though the connector hole 342). In an embodiment, the second sealing member 333 may be disposed around the second cover member 302b (e.g., the support portion 323b) and disposed to contact the partition 343. For example, when the connection portion 313 penetrates the partition 343 from one side of the partition 343 to be disposed inside the connector hole 342, the second sealing member 333 may implement a waterproof or dustproof structure by tightly contacting the partition 343. In implementing a waterproof or dustproof structure, the second sealing member 333 may substantially have a closed curve shape.

Hereinafter, through the embodiments of FIGS. 15 to 18, a coupling relationship between a connector and an external connector (hereinafter referred to as a 'plug 400') is described in detail.

FIG. 15 is a perspective view illustrating a plug 400 coupled to a connector (e.g., the connector 300 of FIG. 9) according to an embodiment of the disclosure. FIG. 16 is a view illustrating an internal state of a plug 400 coupled to a connector (e.g., the connector 300 of FIG. 9) according to an embodiment of the disclosure. FIG. 17 is a cross-sectional view illustrating a state in which a plug 400 is coupled to a connector (e.g., the connector 300 of FIG. 9) according to an embodiment of the disclosure. FIG. 18 is a perspective view illustrating a state in which a plug 400 is coupled to a connector (e.g., the connector 300 of FIG. 9) according to an embodiment of the disclosure.

Referring to FIG. 15, a plug 400, as an example of an external connector, may be coupled to the connector 300 described through the embodiments of FIGS. 6 to 14. The plug 400 may include, e.g., a power plug for supplying power to an electronic device or a plug for transmitting signals between the electronic device and an external power source.

The plug 400 may include a plug housing 401, a receptacle 402 protruding from the plug housing 401, and plug contact terminals 403. The plug housing 401 may serve to protect conductive lines connected to the plug contact terminals 403 from external impacts. The receptacle 402 may be provided to protect the plug contact terminals 403. For example, the receptacle 402 substantially surrounds the contact terminals 403 of the plug 400 and the contact terminals 315 of the connector 300 when the plug 400 and the connector 300 are coupled, thereby preventing moisture or foreign objects from flowing into the contact terminals 403 of the plug 400 and the contact terminals 315 of the connector 300 from the outside.

The number and arrangement of the plug contact terminals 403 may be implemented differently according to the use or standard of the connector 300. However, the contact terminals 403 of the plug 400 compatible with the connector 300 may have a number and arrangement corresponding to the number and arrangement of contact terminals of the connector.

FIG. 16 may show an internal state of a receptacle 402 of a plug 400. Referring to FIG. 16, inside the receptacle 402, plug contact terminals 403, a ground portion 404, and a fixing structure 405 (e.g., side latch) may be disposed.

The plug contact terminals 403 may include, e.g., a plurality of contact terminals 403 disposed parallel in the X-axis direction, which may correspond to the plurality of contact terminals 315 of the connector. The ground portion 404 may be provided to shield noise and prevent short-circuiting of the plug contact terminals 403. The fixing structure 405 may be provided to maintain the coupled state when the plug 400 is coupled with the connector 300, and for example, a side latch (or latching structure) may be applied.

Referring to FIG. 17, when the connector 300 and the plug 400 are coupled, the receptacle 402 of the plug 400 may be configured to surround the plug contact terminals 403 of the plug and the contact terminals 315 of the connector 300. The side wall 341 of the electronic device housing may be configured to surround the receptacle 402 of the plug 400 as substantially another receptacle.

When the connector 300 and the plug 400 are coupled, the plug contact terminals 403 and the contact terminals 315 of the connector 300 may be electrically connected. Further, the ground portion 404 of the plug 400 and the extension 303 of the connector 300 may also be electrically connected. The extension 303 of the connector 300 includes a conductive material and is connected to the ground portion 404 of the plug 400, and may substantially function as a ground portion provided in the connector 300.

Referring to FIGS. 17 and 18, the connector 300 includes a conductive material and includes an extension 303 connected to the ground portion 404 of the plug 400, thereby having an effect of strengthening EMI performance such as more effectively shielding external noise when the plug 400 and the connector 300 are coupled (or connected).

The connector of the disclosure may have an effect of reducing thickness compared to the conventional art by having an effect of substantially omitting a receptacle of the connector when the connector is disposed inside a housing of an electronic device. The connector of the disclosure may have excellent noise shielding performance along with stable waterproof effect. Further, the connector of the disclosure has a structure in which the remaining components (e.g., the second portion 303b of the extension 303) of the extension 303, except for the component (e.g., the first portion 303a of the extension 303) of the extension 303 for securing the noise shielding performance, is formed with a separation distance from contact terminals, which is relatively farther than conventional ones, thereby preventing short-circuiting due to moisture or foreign objects flowing into the connector from the outside.

According to an embodiment of the disclosure, an electronic device including a connector 300 couplable to an external connector 400 may be provided. An electronic device may comprise a housing 201; 340 including a front surface 110A, a rear surface 110B facing a direction opposite to the front surface, and a side wall 210; 341 disposed to at least partially surround a space between the front surface and the rear surface; a connector hole 108; 342 formed to penetrate the side wall, a partition 343 provided inside the housing at a predetermined distance from the side wall, and a connector 300 disposed to face the connector hole from inside the housing while at least a portion thereof is supported by the partition, the connector being couplable to an external connector. The connector may include a fixing portion 311 fixed inside the housing of the electronic device, a connection portion 313 extending from the fixing portion in a first direction toward the connector hole, a first cover member 302a disposed to surround at least a portion of the fixing portion, a second cover member 302b adjacent to the fixing portion or the first cover member and disposed to surround at least a portion of the connection portion, at least a portion of the second cover member including a conductive material, a plurality of contact terminals 315 extending from the fixing portion and partially exposed to an outside of the second cover member at one surface of the connection portion, the plurality of contact terminals being arranged along a second direction crossing the first direction, and an extension 303 extending from a portion of the second cover member including the conductive material. The connector may shield the plurality of contact terminals from external noise using an extension electrically connected to a ground portion of the external connector when the external connector is coupled to the connector.

According to an embodiment, the extension 303 may extend from the portion of the second cover member including the conductive material and include a first portion 303a configured to be electrically connected to the ground portion of the external connector when the external connector is coupled to the connector and a second portion 303b extending from the portion including the conductive material and having a different length from the first portion 303a.

According to an embodiment, the plurality of contact terminals 315 may include a power terminal, and the second portion 303b of the extension 303 is formed at a position corresponding to the power terminal.

According to an embodiment, the power terminal may include a first terminal portion exposed at a surface of the connection portion, a second terminal portion spaced apart from the surface of the connection portion and disposed inside the connection portion, and a third terminal portion connecting the first terminal portion and the second terminal portion.

According to an embodiment, the extension may extend from the second cover member on a first surface of the connection portion and/or on a second surface opposite to the first surface.

According to an embodiment, the electronic device may further comprise a first sealing member 331 disposed between the connection portion and an inner circumferential surface of the second cover member and a second sealing member 333 disposed to surround at least a portion of an outer circumferential surface of the second cover member.

According to an embodiment, the second cover member may include a base portion 321b disposed to face the fixing portion while contacting the second sealing member at an outer surface thereof, or integrally formed with the first cover member and a support portion 323b protruding from the base portion in the first direction and disposed to surround the connection portion. The second sealing member may contact an outer surface of the support portion, and the first sealing member contacts an inner surface of the support portion.

According to an embodiment, at least one of the first sealing member and the second sealing member may have a closed curve shape.

According to an embodiment, the second cover member may have a closed curve shape.

According to an embodiment, the first cover member may include a cover portion 321a surrounding a portion of the fixing portion and at least one fixing piece 323a extending from the cover portion in the second direction.

According to an embodiment of the disclosure, a connector 300 may be provided. The connector may include a fixing portion 311, a connection portion 313 extending from the fixing portion in a first direction, a first cover member 302a disposed to surround at least a portion of the fixing portion, a second cover member 302b adjacent to the fixing portion or the first cover member and disposed to surround at least a portion of the connection portion, at least a portion of the second cover member including a conductive material, a plurality of contact terminals 315 extending from the fixing portion and partially exposed to an outside of the second cover member at one surface of the connection portion, the plurality of contact terminals being arranged along a second direction crossing the first direction, and an extension 303 extending from a portion of the second cover member including the conductive material.

According to an embodiment, the extension 303 may extend from the portion of the second cover member including the conductive material and include a first portion 303a configured to be electrically connected to the ground portion of the external connector when the external connector is coupled to the connector and a second portion 303b extending from the portion including the conductive material and having a different length from the first portion 303a.

According to an embodiment, the plurality of contact terminals 315 may include a power terminal. the second portion 303b of the extension 303 is formed at a position corresponding to the power terminal.

According to an embodiment, the power terminal may include a first terminal portion exposed at a surface of the connection portion, a second terminal portion spaced apart from the surface of the connection portion and disposed inside the connection portion, and a third terminal portion connecting the first terminal portion and the second terminal portion.

According to an embodiment, the extension may extend from the second cover member on a first surface of the connection portion and/or on a second surface.

According to an embodiment, the connector may further comprise a first sealing member 331 disposed between the connection portion and an inner circumferential surface of the second cover member and a second sealing member 333 disposed to surround at least a portion of an outer circumferential surface of the second cover member.

According to an embodiment, the second cover member may include a base portion 321b disposed to face the fixing portion while contacting the second sealing member at an outer surface thereof, or integrally formed with the first cover member and a support portion 323b protruding from the base portion in the first direction and disposed to surround the connection portion. The second sealing member may contact an outer surface of the support portion, and the first sealing member contacts an inner surface of the support portion.

According to an embodiment, at least one of the first sealing member and the second sealing member may have a closed curve shape.

According to an embodiment, the second cover member may have a closed curve shape.

According to an embodiment, the first cover member may include a cover portion 321a surrounding a portion of the fixing portion and at least one fixing piece 323a extending from the cover portion in the second direction.

According to a first example, an electronic device including a connector (300) configured to be coupled to an external connector (400), comprises: a housing (201; 340) including a front surface (110A), a rear surface (110B) facing a direction opposite to the front surface, and a side wall (210; 341) disposed to at least partially surround a space between the front surface and the rear surface; a connector hole (108; 342) formed to penetrate the side wall; a partition (343) provided inside the housing at a predetermined distance from the side wall; and a connector (300) disposed to face the connector hole from inside the housing while at least a portion thereof is supported by the partition, the connector configured to be coupled to the external connector, wherein the connector includes: a fixing portion (311) fixed inside the housing of the electronic device; a connection portion (313) extending from the fixing portion in a first direction toward the connector hole; a first cover member (302a) disposed to surround at least a portion of the fixing portion; a second cover member (302b) adjacent to the fixing portion or the first cover member and disposed to surround at least a portion of the connection portion, at least a portion of the second cover member including a conductive material; a plurality of contact terminals (315) extending from the fixing portion and partially exposed to an outside of the second cover member at one surface of the connection portion, the plurality of contact terminals being arranged along a second direction crossing the first direction; and an extension (303) extending from a portion of the second cover member including the conductive material, and wherein the electronic device is configured to shield the plurality of contact terminals from external noise using an extension electrically connected to a ground portion of the external connector when the external connector is coupled to the connector.

In a second example, the electronic device of the first example further comprises wherein the extension (303) extends from the portion of the second cover member including the conductive material and includes a first portion (303a) configured to be electrically connected to the ground portion of the external connector when the external connector is coupled to the connector and a second portion (303b) extending from the portion including the conductive material and having a different length from the first portion (303a).

In a third example, the electronic device of the first example further comprises that wherein the plurality of contact terminals (315) includes a power terminal, and wherein the second portion (303b) of the extension (303) is formed at a position corresponding to the power terminal.

In a fourth example, the electronic device of the third example further comprises that wherein the power terminal includes a first terminal portion exposed at a surface of the connection portion, a second terminal portion spaced apart from the surface of the connection portion and disposed inside the connection portion, and a third terminal portion connecting the first terminal portion and the second terminal portion.

In a fifth example, the electronic device of any of the first to fourth examples further comprises that the extension extends from the second cover member on a first surface of the connection portion and/or on a second surface opposite to the first surface.

In a sixth example, the electronic device of any of the first to fifth examples further comprises a first sealing member (331) disposed between the connection portion and an inner circumferential surface of the second cover member; and a second sealing member (333) disposed to surround at least a portion of an outer circumferential surface of the second cover member.

In a seventh example, the electronic device of the sixth example further comprises that the second cover member includes a base portion (321b) disposed to face the fixing portion while contacting the second sealing member at an outer surface thereof, or integrally formed with the first cover member and a support portion (323b) protruding from the base portion in the first direction and disposed to surround the connection portion, and wherein the second sealing member contacts an outer surface of the support portion, and the first sealing member contacts an inner surface of the support portion.

In an eighth example, the electronic device of the sixth example further comprises that at least one of the first sealing member and the second sealing member has a closed curve shape.

In a ninth example, the electronic device of any one of the first to eighth examples further comprises that the second cover member has a closed curve shape.

In a tenth example, the electronic device of any of the first to ninth examples further comprises that the first cover member includes a cover portion (321a) surrounding a portion of the fixing portion and at least one fixing piece (323a) extending from the cover portion in the second direction.

According to an eleventh example, a connector (300) comprises: a fixing portion (311); a connection portion (313) extending from the fixing portion in a first direction; a first cover member (302a) disposed to surround at least a portion of the fixing portion; a second cover member (302b) adjacent to the fixing portion or the first cover member and disposed to surround at least a portion of the connection portion, at least a portion of the second cover member including a conductive material; a plurality of contact terminals (315) extending from the fixing portion and partially exposed to an outside of the second cover member at one surface of the connection portion, the plurality of contact terminals being arranged along a second direction crossing the first direction; and an extension (303) extending from a portion of the second cover member including the conductive material.

According to a twelfth example, the connector of the eleventh example further comprises that wherein the extension (303) extends from the portion of the second cover member including the conductive material and includes a first portion (303a) configured to be electrically connected to the ground portion of the external connector when the external connector is coupled to the connector and a second portion (303b) extending from the portion including the conductive material and having a different length from the first portion (303a).

According to a thirteenth example, the connector of the twelfth example further comprises wherein the plurality of contact terminals (315) includes a power terminal, and wherein the second portion (303b) of the extension (303) is formed at a position corresponding to the power terminal.

According to a fourteenth example, the connector of the thirteenth example further comprises wherein the power terminal includes a first terminal portion exposed at a surface of the connection portion, a second terminal portion spaced apart from the surface of the connection portion and disposed inside the connection portion, and a third terminal portion connecting the first terminal portion and the second terminal portion.

According to a fifteenth example, the connector of any one of the eleventh to fourteenth examples further comprises that wherein the extension extends from the second cover member on a first surface and/or a second surface of the connection portion.

According to a sixteenth example, the connector of any of the eleventh to fifteenth examples further comprises a first sealing member (331) disposed between the connection portion and an inner circumferential surface of the second cover member; and a second sealing member (333) disposed to surround at least a portion of an outer circumferential surface of the second cover member.

According to a seventeenth example, the connector of the sixteenth example further comprises wherein the second cover member includes a base portion (321b) disposed to face the fixing portion while contacting the second sealing member at an outer surface thereof, or integrally formed with the first cover member and a support portion (323b) protruding from the base portion in the first direction and disposed to surround the connection portion, and wherein the second sealing member contacts an outer surface of the support portion, and the first sealing member contacts an inner surface of the support portion.

According to an eighteenth example, the connector of the sixteenth example further comprises wherein at least one of the first sealing member and the second sealing member has a closed curve shape.

According to the nineteenth example, the connector of any of the eleventh to eighteenth examples further comprises that wherein the second cover member has a closed curve shape.

According to a twentieth example, the connector of any of the eleventh to nineteenth examples further comprises that the first cover member includes a cover portion (321a) surrounding a portion of the fixing portion and at least one fixing piece (323a) extending from the cover portion in the second direction. While the disclosure has been described and shown in connection with an embodiment thereof, it should be appreciated that an embodiment is intended as limiting the disclosure but as illustrative. It will be apparent to one of ordinary skill in the art that various changes may be made in form and detail without departing from the overall scope of the disclosure, including the appended claims and their equivalents.

## Claims

1. An electronic device including a connector (300), comprising:
a housing (201; 340) including a front surface (110A), a rear surface (110B) facing a direction opposite to the front surface, and a side wall (210; 341) disposed to at least partially surround a space between the front surface and the rear surface;
a connector hole (108; 342) formed to penetrate the side wall (210; 341);
a partition (343) provided inside the housing at a predetermined distance from the side wall; and
a connector (300) at least partially disposed within the connector hole (108; 342), and disposed to face the connector hole (108; 342) from inside the housing while at least a portion thereof supported by the partition (343), the connector (300) configured to be coupled to an external connector (400),
wherein the connector (300) includes:
a fixing portion (311) fixed inside the housing of the electronic device;
a connection portion (313) extending from the fixing portion(311) in a first direction toward the connector hole (108; 342);
a first cover member (302a) disposed to surround at least a portion of the fixing portion(311);
a second cover member (302b) disposed to surround at least a portion of the connection portion (313), at least a portion of the second cover member (302b) including a conductive material;
a plurality of contact terminals (315) extending from the fixing portion (311) and partially exposed to an outside of the second cover member (302b) at one surface of the connection portion(313), the plurality of contact terminals (315) being arranged along a second direction crossing the first direction; and
an extension (303) extending in the first direction from the portion of the second cover member (302b) including the conductive material, and
wherein, when coupled to the external connector (400), the extension (303) is electrically connected to a ground portion of the external connector (400).

2. The electronic device of claim 1, wherein the extension (303) includes a first portion (303a) that is configured to be electrically connected to the ground portion of the external connector (400) when the external connector(400) is coupled to the connector (300) and
a second portion (303b) having a different length from the first portion (303a).

3. The electronic device of claim 2, wherein the second portion (303b) has a shorter length from the portion of the second cover member (302b) including the conductive material than the first portion (303a); and
wherein, when coupled to the external connector (400), the second portion (303b) is not connected to the ground portion of the external connector (400).

4. The electronic device of claim 2 or claim 3, wherein the plurality of contact terminals (315) includes a power terminal, and
wherein the second portion (303b) of the extension (303) is formed at a position corresponding to the power terminal.

5. The electronic device of claim 4, wherein the power terminal includes a first terminal portion (315a-1) exposed at a surface of the connection portion (313), a second terminal portion (315a-2) spaced apart from the surface of the connection portion (313) and disposed inside the connection portion (313), and a third terminal portion (315a-3) connecting the first terminal portion and the second terminal portion.

6. The electronic device of any one of claims 1 to 5, wherein the extension (303) extends from the second cover member (302b) in the first direction on a first surface of the connection portion (313) and/or on a second surface that is opposite to the first surface.

7. The electronic device of claim 6, wherein the connection portion (313) further comprises at least one side surface (313b-1; 313b-2) extending between the first surface and the second surface; and
wherein the extension (303) does not have a portion extending from the second cover member (302b) on the at least one side surface (313b-1; 313b-2).

8. The electronic device of any one of preceding claim, wherein the fixing portion (311) of the connector (300) is disposed inside the housing on one side of the partition (343), and the connection portion (313) penetrates the partition from inside of the housing (340) to be at least partially disposed inside the connector hole.

9. The electronic device of any one of claims 1 to 8, further comprising:
a first sealing member (331) disposed between the connection portion (313) and an inner circumferential surface of the second cover member (302b); and
a second sealing member (333) disposed to surround at least a portion of an outer circumferential surface of the second cover member.

10. The electronic device of claim 9, wherein the second cover member (302b) includes a base portion (321b) disposed to face the fixing portion (311) while contacting the second sealing member (333) at an outer surface thereof, and a support portion (323b) protruding from the base portion (321b) in the first direction and disposed to surround the connection portion (313), and
wherein the second sealing member (333) contacts an outer surface of the support portion, and the first sealing member (331) contacts an inner surface of the support portion.

11. The electronic device of claim 10, wherein the base portion (321b) of the second cover member is integrally formed with the first cover member (302a).

12. The electronic device of any one of claims 9 to 11, wherein at least one of the first sealing member and the second sealing member has a closed curve shape.

13. The electronic device of any one of claims 10 to 12, wherein the support portion (323b) comprises a tube shape, and is disposed to surround at least a portion of an area where the first sealing member (331) is disposed at the connection portion (313), and
the first sealing member (331) contacts an inner circumferential surface of the support portion (323b) to implement a waterproof structure between the connection portion (313) and the second cover member (302b).

14. The electronic device of any one of claim 9 to 13, wherein the second cover member has a closed curve shape, and the second sealing member (333) is disposed to contact the partition (343).

15. The electronic device of any one of preceding claim, wherein the first cover member includes a cover portion (321a) surrounding a portion of the fixing portion and at least one fixing piece (323a) extending from the cover portion in the second direction.
